# EUROPEAN PATENT APPLICATION

(11) **EP 2 357 091 A1**
(43) Date of publication of application: **17.08.2011**
(21) Application number: 09830115.3
(22) Date of filing: 08.09.2009
(51) Int. Cl.: B44F 1/04, B44C 5/08, G02B 5/18

(54) **EXTERIOR PART AND METHOD OF MANUFACTURING SAME**

(30) Priority: 04.12.2008 JP 2008309198
(71) Applicant: Panasonic Corporation, Kadoma-shi Osaka 571-8501 (JP)
(72) Inventor: UTSURO, Hidetoshi c/o Panasonic Corporation IPROC, Osaka 540-6207 (JP); NISHIKAWA, Yukio c/o Panasonic Corporation IPROC, Osaka 540-6207 (JP); TAKAHASHI, Masayuki c/o Panasonic Corporation IPROC, Osaka 540-6207 (JP); WADA, Toshihiko c/o Panasonic Corporation IPROC, Osaka 540-6207 (JP)
(74) Representative: Grünecker, Kinkeldey, Stockmair & Schwanhäusser Anwaltssozietät
(86) International application number: PCT/JP2009/004422
(87) International publication number: WO 2010/064344

(57) **Abstract**

An exterior part (100) has a first structural color region (111) formed by a first linear peak-valley pattern including multiple linear grooves arranged in X direction, and a second structural color region (112) formed by a second linear peak-valley pattern including multiple linear grooves arranged in Y direction. The widths, depths, and pitches of the linear grooves are dimensions enabling the generation of diffracted light including structural colors. In the first structural color region (111), surfaces inclined in X direction (3 o'clock or 9 o'clock direction) are formed. In the second structural color region (112), surfaces inclined in Y direction (0 o'clock or 6 o'clock direction) are formed.

## Description

### Technical Field

The present invention relates to exterior parts that can exhibit structural colors and a method of manufacturing the same.

### Background Art

In the prior art, known molding methods for producing decorative effects on exterior parts include: surface texturing; secondary processing after molding; and carving decorative lines and characters on die surfaces such that the lines and characters appear in relief on molding surfaces. Particularly, a molded article is generally colored by special molding such as multicolored molding or a molded article of a certain color is subjected to printing, pasting, or painting. In coloring of these methods, however, the manufacturing cost increases because of the step of printing, pasting, or painting.

Particularly, a large amount of carbon dioxide is emitted in the painting step. Moreover, the use of various pigments, dyes, or organic solvents requires after treatment such as waste liquid treatment. The emission of a large amount of carbon dioxide and the necessity for after treatment such as waste liquid treatment may result in serious problems in operations and environments.

In order to solve these problems, techniques not using coloring matters such as pigments and dyes have been demanded. In response to the demand, techniques have been proposed in which colors (hereinafter, will be called structural colors) are developed depending on the material and shape of, e.g., a transfer sheet with a fine peak-valley surface (e.g., see patent document 1).

A structural color is color development caused by physical phenomena including the reflection, interference, and diffraction of light, unlike color development caused by the absorption or emission of visible light through coloring matters. For example, optical phenomena in the structural color development include multilayer interference, thin-film interference, refraction, dispersion, light scattering, Mie scattering, diffraction, and diffraction grating. Optical thin films generally used in structural color development are 1 µm or less in thickness and are formed by thin-film coating technology such as vacuum deposition and sputtering. Such structural color development is hardly varied with time by ultraviolet rays and has advantages such as a high gloss. Thus structural color development has been a promising painting and coloring method for exterior parts.

### <Transfer sheet>

The following will describe a transfer sheet using structural color development.

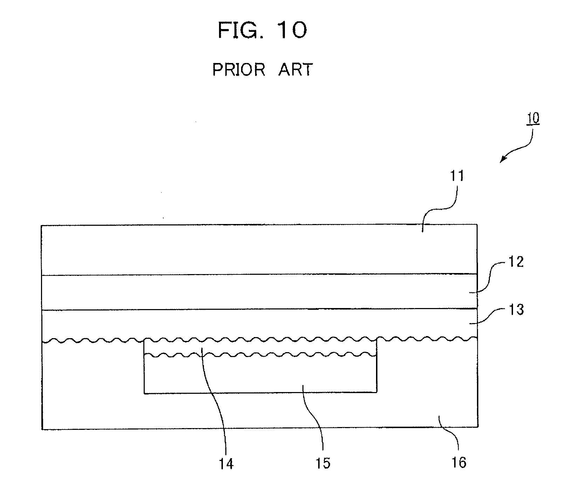

As shown in FIG. 10, in a transfer sheet 10, a fine peak-valley pattern is formed on a diffraction structure forming layer 13. The fine peak-valley pattern constitutes a diffraction grating and is capable of generating colored light including structural colors.

The transfer sheet 10 is fabricated by the following steps: (a) first, a polyamide-imide resin having a glass transition temperature (Tg) of 250°C is applied to a support 11 to form a heat-resistant protective layer 12. (b) Next, urethane resin is applied to the heat-resistant protective layer 12 to form a diffraction structure forming layer 13. (c) After that, the diffraction grating having the fine peak-valley pattern is formed on the surface of the diffraction structure forming layer 13 by roll embossing method. (d) Next, a diffraction effect layer 14, which is a metallic reflective layer, is formed on the diffraction structure forming layer 13 on which the diffraction grating has been formed, and a heat-resistant mask layer 15 is pattern-printed on the diffraction effect layer 14. (e) After the pattern-printing, the layers are immersed into a bath filled with a NaOH solution to etch the diffraction effect layer 14 exposed in a part where the heat-resistant mask layer 15 is not provided. (f) An adhesive layer 16 is formed after the etching.

### Citation List

### Patent Literature

Patent Literature 1: Japanese Patent Laid-Open No. 2005-7624

### Summary of Invention

### Technical Problem

In the case of a transferred body in which grooves are formed in one direction by roll embossing method as in a transfer sheet 10, however, the emission of diffracted light generated by a diffraction grating having a fine peak-valley pattern is limited to one direction. For this reason, colored light including structural colors is visible when the transferred body is viewed in a specific direction, whereas the colored light becomes invisible when the transferred body is viewed in other directions. Such invisibility is a serious problem in the implementation of exterior parts with excellent design.

For example, it is assumed that the outer surface of a product is decorated with an exterior part on which a diffraction grating having a fine peak-valley pattern has been formed. In this case, colored light including structural colors or the inside of a product may be viewed by a user depending on the viewing direction, thereby varying the impression of the product. Particularly, the visibility of the inside of the product may degrade the design of the product.

The present invention has been devised to solve the problem. An object of the present invention is to provide exterior parts and a method of manufacturing the same by which colored light including structural colors can be viewed in multiple directions.

### Solution to Problem

In order to attain the object, exterior parts of the present invention have the following characteristics:

### (CL1)

Exterior parts of the present invention are (a) exterior parts on which a peak-valley structure capable of generating colored-light including structural colors is formed, wherein (b) the peak-valley structure is formed by a peak-valley pattern including multiple grooves and has a first structural color region in which surfaces inclined in a first direction are formed and a second structural color region in which surfaces inclined in a second direction different from the first direction are formed.

### (CL2)

Exterior parts according to (CL1), wherein (a) the first structural color region is formed by a first peak-valley pattern in which the grooves are arranged in the first direction, and (b) the second structural color region is formed by a second peak-valley pattern in which the grooves are arranged in the second direction.

### (CL3)

Exterior parts according to (CL2), wherein at least one of the first structural color region and the second structural color region is formed by a peak-valley pattern including multiple linear grooves.

### (CL4)

Exterior parts according to (CL2), wherein at least one of the first structural color region and the second structural color region is formed by a peak-valley pattern including multiple curved grooves.

### (CL5)

Exterior parts according to (CL1), wherein the first structural color region and the second structural color region are each formed by a peak-valley pattern in which multiple concentric grooves are arranged with respect to the common center.

### (CL6)

Exterior parts according to (CL1), wherein the first structural color region and the second structural color region are each formed by a peak-valley pattern in which multiple wavy grooves are arranged in a predetermined direction.

The present invention may be implemented not only as exterior parts but also as a method of manufacturing exterior parts as will be described below:

### (CL7)

A method of manufacturing exterior parts according to the present invention is (a) a method of manufacturing exterior parts on which a peak-valley structure capable of generating colored light including structural colors is formed, the method including: (b) performing surface treatment for forming the peak-valley structure, several times on one of exterior parts and the die of exterior parts while changing an angle of direction, and thereby forming a first region in which surfaces inclined in a first direction are formed and a second region in which surfaces inclined in a second direction different from the first direction are formed.

### Advantageous effects of Invention

According to the present invention, a fine peak-valley structure is formed that has inclined surfaces in multiple directions, so that diffracted light including structural colors is generated in multiple directions. It is therefore possible to generate desired colored light in multiple directions. Since the colored light including structural colors can be viewed in multiple directions, exterior parts can be obtained with excellent design.

### Brief Description of the Drawings

FIG. 1A is a top view showing a structural color region according to a first embodiment of the present invention.
FIG. 1B is a sectional view taken along cutting line A-A of the structural color region according to the first embodiment of the present invention.
FIG. 2 is a perspective view showing the structural color region according to the first embodiment of the present invention.
FIG. 3A is a top view showing a structural color region according to a second embodiment of the present invention.
FIG. 3B is a sectional view taken along cutting line B-B of the structural color region according to the second embodiment of the present invention.
FIG. 4A is a top view showing a structural color region according to a third embodiment of the present invention.
FIG. 4B is a sectional view taken along cutting line C-C of the structural color region according to the third embodiment of the present invention.
FIG. 5A is a top view showing a structural color region according to a fourth embodiment of the present invention.
FIG. 5B is a sectional view taken along cutting line D-D of the structural color region according to the fourth embodiment of the present invention.
FIG. 6A is a top view showing a structural color region according to a fifth embodiment of the present invention.
FIG. 6B is a sectional view taken along cutting line E-E of the structural color region according to the fifth embodiment of the present invention.
FIG. 7A is a top view showing a structural color region according to a sixth embodiment of the present invention.
FIG. 7B is a sectional view taken along cutting line F-F of the structural color region according to the sixth embodiment of the present invention.
FIG. 8A is a top view showing a structural color region according to a seventh embodiment of the present invention.
FIG. 8B is a sectional view taken along cutting line G-G of the structural color region according to the seventh embodiment of the present invention.
FIG. 9A is a top view showing a structural color region according to an eighth embodiment of the present invention.
FIG. 9B is a sectional view taken along cutting line H-H of the structural color region according to the eighth embodiment of the present invention.
FIG. 10 is a structural diagram showing a transfer sheet of the prior art.

### Description of Embodiments

Preferred embodiments of exterior parts and the manufacturing thereof according to the present invention will be described below with reference to the accompanying drawings.

### (First Embodiment)

A first embodiment of the present invention will be described below.

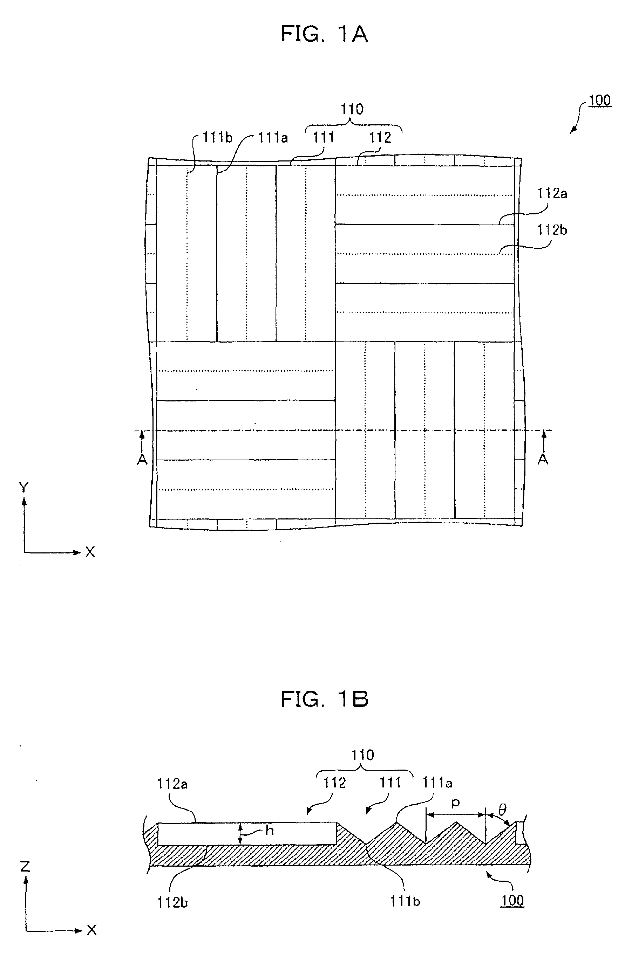

As shown in FIG. 1A, a structural color region 110 is formed on the surface (X-Y plane) of a resin exterior part 100. In FIG. 1A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 110 is made up of first structural color regions 111 and second structural color regions 112. The first structural color regions 111 and the second structural color regions 112 are periodically arranged.

The first structural color region 111 is a rectangular region (several tens µm to several µm in X direction and Y direction) in which a peak-valley structure is formed by a first linear peak-valley pattern. The first linear peak-valley pattern includes a plurality of linear grooves (hereinafter, will be called first linear grooves) arranged in a first direction (X direction). The first linear grooves are extended perpendicularly (in Y direction) to the first direction and are formed with dimensions (several hundreds nm) enabling the generation of diffracted light including structural colors.

The second structural color region 112 is a rectangular region (several tens µm to several µm in X direction and Y direction) in which a peak-valley structure is formed by a second linear peak-valley pattern. The second linear peak-valley pattern includes a plurality of linear grooves (hereinafter, will be called second linear grooves) arranged in a second direction (Y direction). The second linear grooves are extended perpendicularly (in X direction) to the second direction and are formed with dimensions (several hundreds nm) enabling the generation of diffracted light including structural colors.

In the first structural color region 111, peaks 111a and valleys 111b are formed and the surfaces are inclined in the 3 o'clock direction and the 9 o'clock direction. In the second structural color region 112, peaks 112a and valleys 112b are formed and surfaces are inclines in the 0 o'clock direction and the 6 o'clock direction.

For example, as shown in FIG. 1B, the first linear grooves and the second linear grooves are formed on the exterior part 100 by a cutting tool having a 96° tip. The linear grooves are V-shaped in cross section and are several hundreds nm in width.

The first structural color region 111 and the second structural color region 112 are different only in the orientations of the grooves. A slope angle θ is 48° and a pitch p is 0.5 µm or 0.7 µm. When the pitch p is 0.5 µm, a depth h is 225 nm. When the pitch p is 0.7 µm, the depth h is 315 nm.

The slope angle θ, the pitch p, and the depth h may vary between the first structural color region 111 and the second structural color region 112.

The first linear grooves and the second linear grooves may be protected by protective layers.

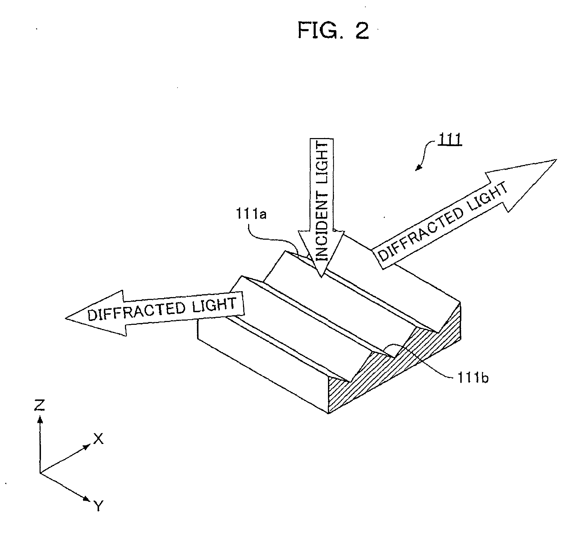

As shown in FIG. 2, light incident on the first structural color region 111 is diffracted by the first linear grooves in the two directions of 3 o'clock and 9 o'clock. Similarly, light incident on the second structural color region 112 is diffracted by the second linear grooves in the two directions of 0 o'clock and 6 o'clock.

In other words, light incident on the structural color region 110 is diffracted in the four directions of 0 o'clock, 3 o'clock, 6 o'clock, and 9 o'clock. The diffracted light generated in the four directions is viewed by a user as colored light including structural colors.

The first linear grooves and the second linear grooves may be formed on the die (not shown) of the exterior part 100 instead of the exterior part 100. Thus the exterior part 100 on which the first linear grooves and the second linear grooves are formed can be manufactured by injection molding.

### <Conclusion>

In the prior art, a peak-valley structure including surfaces inclined in two directions is formed by grooves extended in one direction, so that diffracted light is generated only in the two directions and colored light including structural colors is generated only in the two directions, whereas in the present embodiment, the peak-valley structure including surfaces inclined in multiple directions is formed by the first linear grooves and the second linear grooves, so that diffracted light including structural colors is generated in the multiple directions. Thus desired colored light can be generated in the multiple directions. Since colored light including structural colors is viewed in the multiple directions, achieving exterior parts with excellent design.

### (Second Embodiment)

A second embodiment of the present invention will be described below.

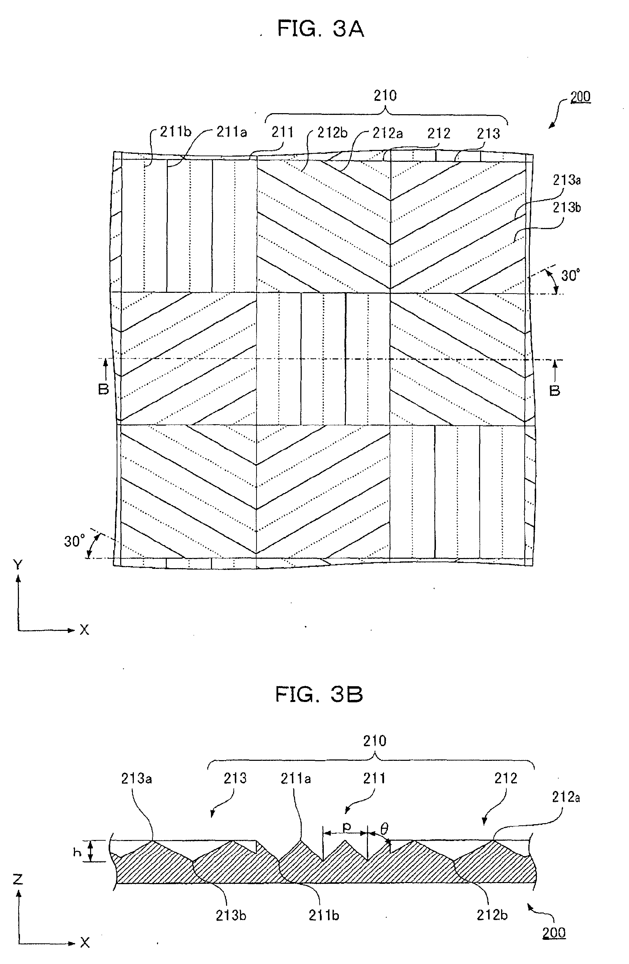

As shown in FIG. 3A, a structural color region 210 is formed on the surface (X-Y plane) of a resin exterior part 200. In FIG. 3A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 210 is made up of first structural color regions 211, second structural color regions 212, and third structural color regions 213. The first structural color regions 211, the second structural color regions 212, and the third structural color regions 213 are periodically arranged.

The first structural color region 211 is a rectangular region (several tens µm to several µm in X direction and Y direction) in which a peak-valley structure is formed by a first linear peak-valley pattern. The first linear peak-valley pattern includes a plurality of linear grooves (hereinafter, will be called first linear grooves) arranged in a first direction (X direction). The first linear grooves are extended perpendicularly (in Y direction) to the first direction and are formed with dimensions (several hundreds nm) enabling the generation of diffracted light including structural colors.

The second structural color region 212 is a rectangular region (several tens µm to several µm in X direction and Y direction) in which a peak-valley structure is formed by a second linear peak-valley pattern. The second linear peak-valley pattern includes a plurality of linear grooves (hereinafter, will be called second linear grooves) arranged in a second direction (1 or 7 o'clock direction). The second linear grooves are extended perpendicularly (in the 4 or 10 o'clock direction) to the second direction and are formed with dimensions (several hundreds nm) enabling the generation of diffracted light including structural colors.

The third structural color region 213 is a rectangular region (several tens µm to several µm in X direction and Y direction) in which a peak-valley structure is formed by a third linear peak-valley pattern. The third linear peak-valley pattern includes a plurality of linear grooves (hereinafter, will be called third linear grooves) arranged in a third direction (5 or 11 o'clock direction). The third linear grooves are extended perpendicularly (in the 2 or 8 o'clock direction) to the third direction and are formed with dimensions (several hundreds nm) enabling the generation of diffracted light including structural colors.

In the first structural color region 211, peaks 211a and valleys 211b are formed and the surfaces are inclined in the 3 o'clock direction and the 9 o'clock direction. In the second structural color region 212, peaks 212a and valleys 212b are formed and the surfaces are inclined in the 1 o'clock direction and the 7 o'clock direction. In the third structural color region 213, peaks 213a and valleys 213b are formed and the surfaces are inclined in the 5 o'clock direction and the 11 o'clock direction.

For example, as shown in FIG. 3B, the first linear grooves, the second linear grooves, and the third linear grooves are formed on the exterior part 200 by the cutting tool of the first embodiment. The linear grooves are V-shaped in cross section and are several hundreds nm in width.

The first structural color region 211, the second structural color region 212, and the third structural color region 213 are different only in the orientations of the grooves. A slope angle θ, a pitch p, and a depth h are equal to those of the first embodiment.

The slope angle θ, the pitch p, and the depth h may vary among the first structural color region 214, the second structural color region 212, and the third structural color region 213.

The first linear grooves, the second linear grooves, and the third linear grooves may be protected by protective layers.

Light incident on the first structural color region 211 is diffracted by the first linear grooves in the two directions of 3 o'clock and 9 o'clock. Similarly, light incident on the second structural color region 212 is diffracted by the second linear grooves in the two directions of 1 o'clock and 7 o'clock. Further, light incident on the third structural color region 213 is diffracted by the third linear grooves in the two directions of 5 o'clock and 11 o'clock.

In other words, light incident on the structural color region 210 is diffracted in the six directions of 1 o'clock, 3 o'clock, 5 o'clock, 7 o'clock, 9 o'clock, and 11 o'clock. The diffracted light generated in the six directions is viewed by a user as colored light including structural colors.

The first linear grooves, the second linear grooves, and the third linear grooves may be formed on the die (not shown) of the exterior part 200 instead of the exterior part 200. Thus the exterior part 200 on which the first linear grooves, the second linear grooves, and the third linear grooves are formed can be manufactured by injection molding.

### (Third Embodiment)

A third embodiment of the present invention will be described below.

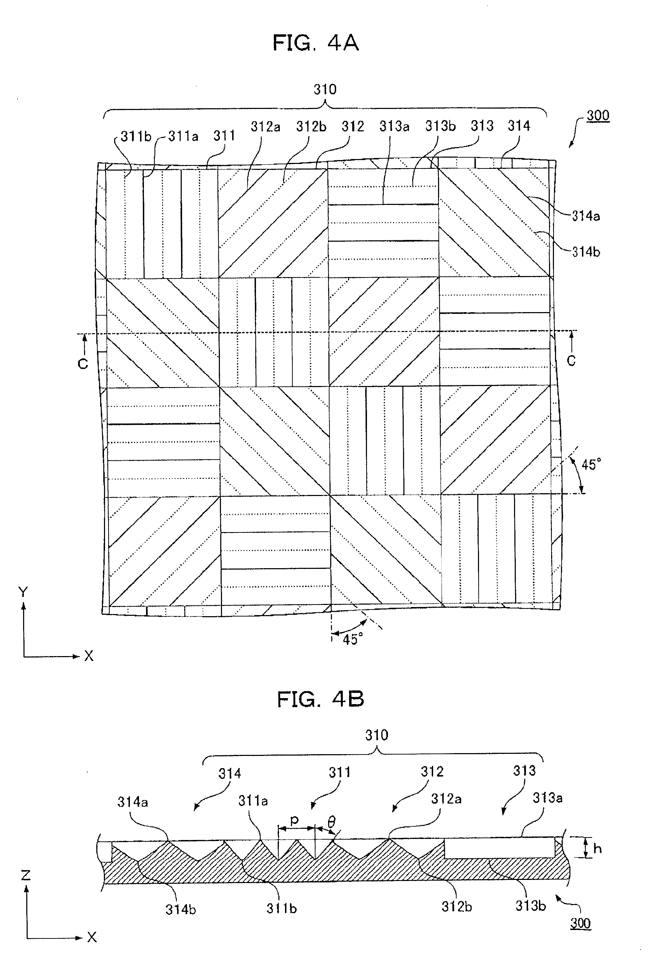

As shown in FIG. 4A, a structural color region 310 is formed on the surface (X-Y plane) of a resin exterior part 300. In FIG. 4A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 310 is made up of first structural color regions 311, second structural color regions 312, third structural color regions 313, and the fourth structural color regions 314. The first structural color regions 311, the second structural color regions 312, the third structural color regions 313, and the fourth structural color regions 314 are periodically arranged.

The first structural color region 311 is a rectangular region (several tens µm to several µm in X direction and Y direction) in which a peak-valley structure is formed by a first linear peak-valley pattern. The first linear peak-valley pattern includes a plurality of linear grooves (hereinafter, will be called first linear grooves) arranged in a first direction (X direction). The first linear grooves are extended perpendicularly (in Y direction) to the first direction and are formed with dimensions (several hundreds nm) enabling the generation of diffracted light including structural colors.

The second structural color region 312 is a rectangular region (several tens µm to several µm in X direction and Y direction) in which a peak-valley structure is formed by a second linear peak-valley pattern. The second linear peak-valley pattern includes a plurality of linear grooves (hereinafter, will be called second linear grooves) arranged in a second direction (in the 4:30 or 10:30 direction). The second linear grooves are extended perpendicularly to the second direction
(1:30 or 7:30 direction) and are formed with dimensions (several hundreds nm) enabling the generation of diffracted light including structural colors.

The third structural color region 313 is a rectangular region (several tens µm to several µm in X direction and Y direction) in which a peak-valley structure is formed by a third linear peak-valley pattern. The third linear peak-valley pattern includes a plurality of linear grooves (hereinafter, will be called third linear grooves) arranged in a third direction (Y direction). The third linear grooves are extended perpendicularly (in X direction) to the third direction and are formed with dimensions (several hundreds nm) enabling the generation of diffracted light including structural colors.

The fourth structural color region 314 is a rectangular region (several tens µm to several µm in X direction and Y direction) in which a peak-valley structure is formed by a fourth linear peak-valley pattern. The fourth linear peak-valley pattern includes a plurality of linear grooves (hereinafter, will be called fourth linear grooves) arranged in a fourth direction (1:30 or 7:30 direction). The fourth linear grooves are extended perpendicularly (in the 4:30 or 10:30 direction) to the fourth direction and are formed with dimensions (several hundreds nm) enabling the generation of diffracted light including structural colors.

In the first structural color region 311, peaks 311a and valleys 311b are formed and the surfaces are inclined in the 3 o'clock direction and the 9 o'clock direction. In the second structural color region 312, peaks 312a and valleys 312b are formed and the surfaces are inclined in the 4:30 direction and the 10:30 direction. In the third structural color region 313, peaks 313a and valleys 313b are formed and the surfaces are inclined in the 0 o'clock direction and the 6 o'clock direction. In the fourth structural color region 314, peaks 314a and valleys 314b are formed and the surfaces are inclined in the 1:30 direction and the 7:30 direction.

For example, as shown in FIG. 4B, the first linear grooves, the second linear grooves, the third linear grooves, and the fourth linear grooves are formed on the exterior part 300 by the cutting tool of the first embodiment. The linear grooves are V-shaped in cross section and are several hundreds nm in width.

The first linear grooves, the second linear grooves, the third linear grooves, and the fourth linear grooves vary only in the orientation. A slope angle θ, a pitch p, and a depth h are equal to those of the first embodiment.

The slope angle θ, the pitch p, and the depth h may vary among the first structural color region 311, the second structural color region 312, the third structural color region 313, and the fourth structural color region 314.

The first linear grooves, the second linear grooves, the third linear grooves, and the fourth linear grooves may be protected by protective layers.

Light incident on the first structural color region 311 is diffracted by the first linear grooves in the two directions of 3 o'clock and 9 o'clock. Similarly, light incident on the second structural color region 312 is diffracted by the second linear grooves in the two directions of 4:30 and 10:30. Further, light incident on the third structural color region 313 is diffracted by the third linear grooves in the two directions of 0 o'clock and 6 o'clock. Moreover, light incident on the fourth structural color region 314 is diffracted by the fourth linear grooves in the two directions of 1:30 and 7:30.

In other words, light incident on the structural color region 310 is diffracted in the eight directions of 0 o'clock, 1:30, 3 o'clock, 4:30, 6 o'clock, 7:30, 9 o'clock, and 10:30. The diffracted light generated in the eight directions is viewed by a user as colored light including structural colors.

The first linear grooves, the second linear grooves, the third linear grooves, and the fourth linear grooves may be formed on the die (not shown) of the exterior part 300 instead of the exterior part 300. Thus the exterior part 300 on which the first linear grooves, the second linear grooves, the third linear grooves, and the fourth linear grooves are formed can be manufactured by injection molding.

### (Fourth Embodiment)

A fourth embodiment of the present invention will be described below.

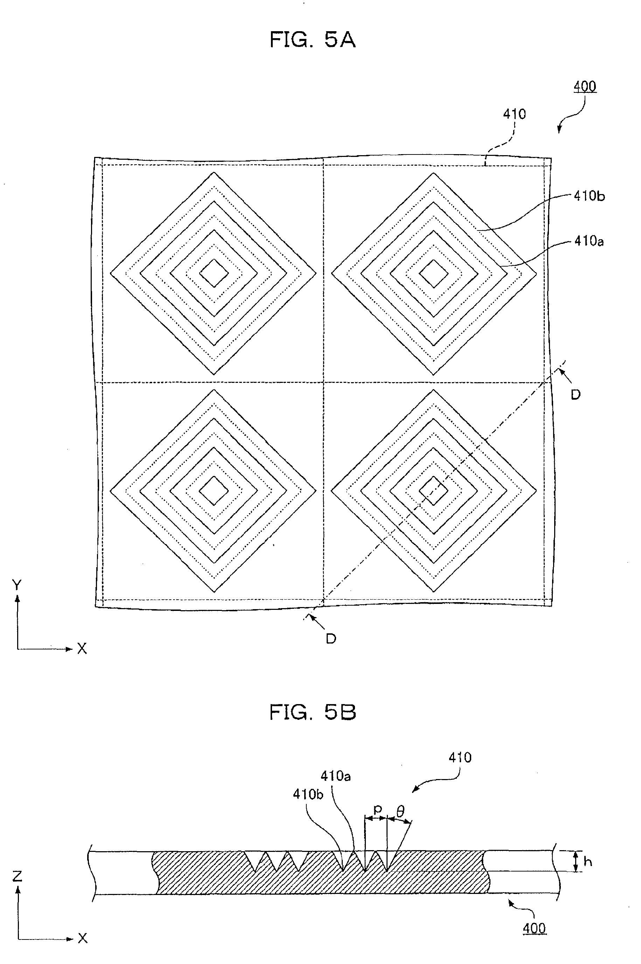

As shown in FIG. 5A, structural color regions 410 are formed on the surface (X-Y plane) of a resin exterior part 400. The structural color regions 410 (indicated by broken lines in FIG. 5A) are arranged in X direction and Y direction. In FIG. 5A, dotted lines represent valleys and solid lines represent peaks. On the X-Y plane, 0 o'clock is set at the upper side and directions at every 30° in a clockwise direction are set at 1 o'clock to 17. o'clock. The 0 o'clock or 6 o'clock direction is denoted as Y direction and the 3 o'clock or 9 o'clock direction is denoted as X direction.

The structural color region 410 is a rectangular region (several tens µm to several µm in X direction and Y direction) in which a peak-valley structure is formed by a concentric peak-valley pattern. The concentric peak-valley pattern includes a plurality of square grooves arranged with respect to the common center (hereinafter, will be called concentric square grooves). The concentric square grooves are varied in diameter and are formed with dimensions (several hundreds nm) enabling the generation of diffracted light including structural colors.

In the structural color region 410, peaks 410a and valleys 410b are formed and the surfaces are inclined in the 1:30, 4:30, 7:30, and 10:30 directions.

In other words, the structural color region 410 includes a part having the surfaces inclined in the 1:30 direction and the 7:30 direction and a part having the surfaces inclined in the 4:30 direction and the 10:30 direction.

For example, as shown in FIG. 5B, the concentric square grooves are formed on the exterior part 400 by the cutting tool of the first embodiment. The grooves are V-shaped in cross section and are several hundreds nm in width.

The concentric square grooves are different only in the orientations. A slope angle θ, a pitch p, and a depth h are equal to those of the first embodiment.

Light incident on the structural color regions 410 is diffracted by the concentric square grooves in the four directions of 1:30, 4:30, 7:30, and 10:30. The diffracted light generated in the four directions is viewed by a user as colored light including structural colors.

The concentric square grooves may be formed on the die (not shown) of the exterior part 400 instead of the exterior part 400. Thus the exterior part 400 on which the concentric square grooves are formed can be manufactured by injection molding.

### (Fifth Embodiment)

A fifth embodiment of the present invention will be described below.

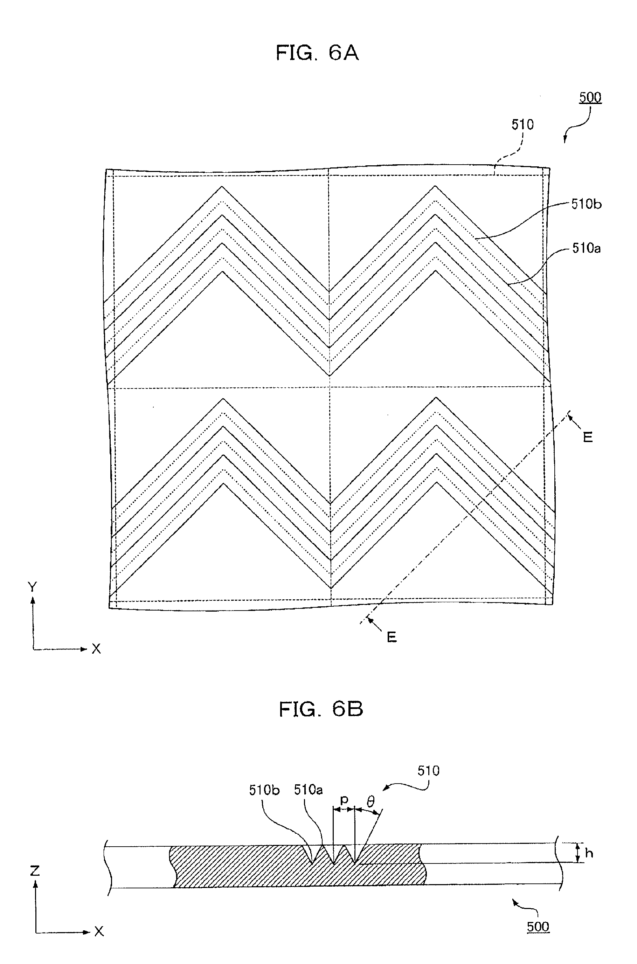

As shown in FIG. 6A, structural color regions 510 are formed on the surface (X-Y plane) of a resin exterior part 500. The structural color regions 510 (indicated by broken lines in FIG. 6A) are arranged in X direction and Y direction. In FIG. 6A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 510 is a rectangular region (several tens µm to several µm in X direction and Y direction) in which a peak-valley structure is formed by a wavy peak-valley pattern. The wavy peak-valley pattern includes a plurality of zigzag-type grooves (hereinafter, will be called zigzag grooves) arranged in a first direction (Y direction). The zigzag grooves are extended perpendicularly (in the X direction) to the first direction and are formed with dimensions (several hundreds nm) enabling the generation of diffracted light including structural colors.

In the structural color region 510, peaks 510a and valleys 510b are formed and the surfaces are inclined in the 1:30, 7:30, 4:30, and 10:30 directions.

In other words, the structural color region 510 includes a part having the surfaces inclined in the 1:30 direction and the 7:30 direction and a part having the surfaces inclined in the 4:30 direction and the 10:30 direction.

For example, as shown in FIG. 6B, the zigzag grooves are formed on the exterior part 500 by the cutting tool of the first embodiment. The grooves are V-shaped in cross section and are several hundreds nm in width. In this case, the zigzag grooves are continuously formed over the adjacent structural color regions 510.

The zigzag grooves are different only in the orientations. A slope angle θ, a pitch p, and a depth h are equal to those of the first embodiment.

Light incident on the structural color regions 510 is diffracted by the zigzag grooves in the four directions of 1:30, 4:30, 7:30, and 10:30. The diffracted light in the four directions is viewed by a user as colored light including structural colors.

The zigzag grooves may be formed on the die (not shown) of the exterior part 500 instead of the exterior part 500. Thus the exterior part 500 on which the zigzag grooves are formed can be manufactured by injection molding.

### (Sixth Embodiment)

A sixth embodiment of the present invention will be described below.

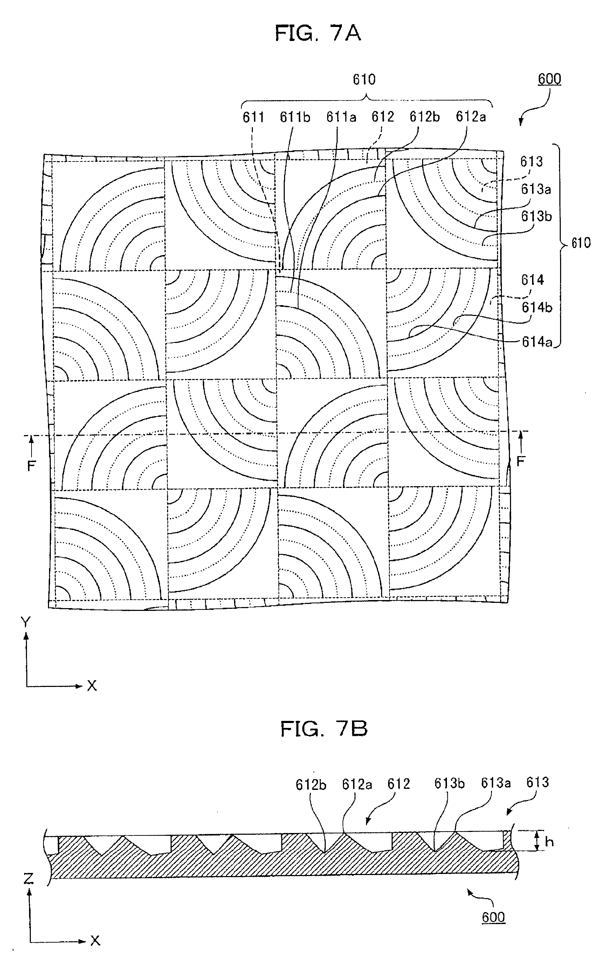

As shown in FIG. 7A, a structural color region 610 is formed on the surface (X-Y plane) of a resin exterior part 600. In FIG. 7A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 610 is made up of first structural color regions 611, second structural color regions 612, third structural color regions 613, and fourth structural color regions 614. The first structural color regions 611, the second structural color regions 612, the third structural color regions 613, and the fourth structural color regions 614 are periodically arranged.

The first structural color region 611 is a rectangular region (several tens µm to several µm in X direction and Y direction) in which a peak-valley structure is formed by a first curved peak-valley pattern. The first curved peak-valley pattern includes a plurality of sector grooves (hereinafter, will be called first sector grooves) arranged in a first radial direction (1:30 direction). The first sector grooves are extended along the arc of the first quadrant (from 0 o'clock to 3 o'clock) and are formed with dimensions (several hundreds nm) enabling the generation of diffracted light including structural colors.

The second structural color region 612 is a rectangular region (several tens µm to several µm in X direction and Y direction) in which a peak-valley structure is formed by a second curved peak-valley pattern. The second curved peak-valley pattern includes a plurality of sector grooves (hereinafter, will be called second sector grooves) arranged in a second radial direction (10:30 direction). The second sector grooves are extended along the arc of the second quadrant (from 9 o'clock to 12 o'clock) and are formed with dimensions (several hundreds nm) enabling the generation of diffracted light including structural colors.

The third structural color region 613 is a rectangular region (several tens µm to several µm in X direction and Y direction) in which a peak--valley structure is formed by a third curved peak-valley pattern. The third curved peak-valley pattern includes a plurality of sector grooves (hereinafter, will be called third sector grooves) arranged in a third radial direction (7:30 direction). The third sector grooves are extended along the arc of the third quadrant (from 6 o'clock to 9 o'clock) and are formed with dimensions (several hundreds nm) enabling the generation of diffracted light including structural colors.

The fourth structural color region 614 is a rectangular region (several tens µm to several µm in X direction and Y direction) in which a peak-valley structure is formed by a fourth curved peak-valley pattern. The fourth curved peak-valley pattern includes a plurality of sector grooves (hereinafter, will be called fourth sector grooves) arranged in a fourth radial direction (4:30 direction). The fourth sector grooves are extended along the arc of the fourth quadrant (from 3 o'clock to 6 o'clock) and are formed with dimensions (several hundreds nm) enabling the generation of diffracted light including structural colors.

Further, in the first structural color region 611, peaks 611a and valleys 611b are formed and the surfaces are inclined in the 0 o'clock to 3 o'clock directions with the first radial direction (1:30 direction). In the second structural color region 612, peaks 612a and valleys 612b are formed and the surfaces are inclined in the 9 o'clock to 12 o'clock directions with the second radial direction (10:30 direction). In the third structural color region 613, peaks 613a and valleys 613b are formed and the surfaces are inclined in the 6 o'clock to 9 o'clock directions with the third radial direction (7:30 direction). In the fourth structural color region 614, peaks 614a and valleys 614b are formed and the surfaces are inclined in the 3 o'clock to 6 o'clock directions with the fourth radial direction (4:30 direction).

For example, as shown in FIG. 7B, the first sector grooves, the second sector grooves, the third sector grooves, and the fourth sector grooves are formed on the exterior part 600 by the cutting tool of the first embodiment. The grooves are V-shaped in cross section and are several hundreds nm in width.

The first sector grooves, the second sector grooves, the third sector grooves, and the fourth sector grooves are different only in the orientations. A slope angle θ, a pitch p, and a depth h are equal to those of the first embodiment.

The slope angle θ, the pitch p, and the depth h may vary among the first structural color region 611, the second structural color region 612, the third structural color region 613, and the fourth structural color region 614.

Light incident on the first structural color region 611 is diffracted by the first sector grooves and diffracted light is generated in the 0 o'clock to 3 o'clock directions. Similarly, light incident on the second structural color region 612 is diffracted by the second sector grooves and diffracted light is generated in the 9 o'clock to 12 o'clock directions. Further, light incident on the third structural color region 613 is diffracted by the third sector grooves and diffracted light is generated in the 6 o'clock to 9 o'clock directions. Moreover, light incident on the fourth structural color region 614 is diffracted by the fourth sector grooves and diffracted light is generated in the 3 o'clock to 6 o'clock directions.

In other words, light incident on the structural color region 610 is diffracted in all directions. The diffracted light generated in all the directions is viewed by a user as colored light including structural colors.

The first sector grooves, the second sector grooves, the third sector grooves, and the fourth sector grooves may be formed on the die (not shown) of the exterior part 600 instead of the exterior part 600. Thus the exterior part 600 on which the first sector grooves, the second sector grooves, the third sector grooves, and the fourth sector grooves are formed can be manufactured by injection molding.

### (Seventh Embodiment)

A seventh embodiment of the present invention will be described below.

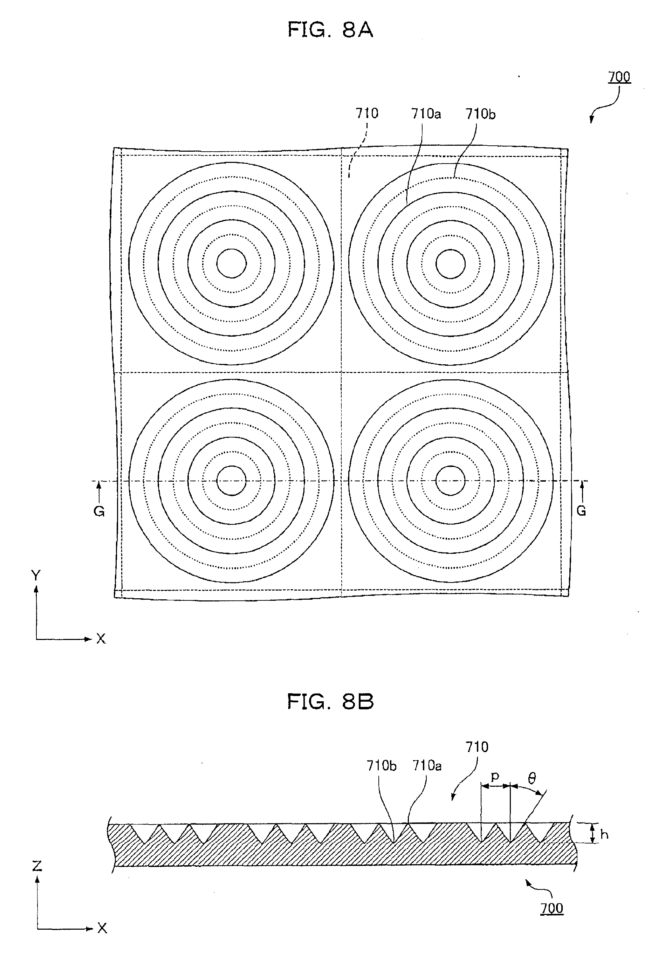

As shown in FIG. 8A, structural color regions 710 are formed on the surface (X-Y plane) of a resin exterior part 700. The structural color regions 710 (indicated by broken lines in FIG. 8A) are arranged in X direction and Y direction. In FIG. 8A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 710 is a rectangular region (several tens µm to several µm in X direction and Y direction) in which a peak-valley structure is formed by a concentric peak-valley pattern. The concentric peak-valley pattern includes a plurality of circular grooves arranged with respect to the common center (hereinafter, will be called concentric circular grooves). The concentric circular grooves are varied in diameter and are formed with dimensions (several hundreds nm) enabling the generation of diffracted light including structural colors.

In the structural color region 710, peaks 710a and valleys 710b are formed and the surfaces are inclined in all directions.

In other words, the structural color region 710 includes a part having the surfaces inclined in the 0 o'clock to 3 o'clock directions, a part having the surfaces inclined in the 3 o'clock to 6 o'clock directions, a part having the surfaces inclined in the 6 o'clock to 9 o'clock directions, and a part having the surfaces inclined in the 9 o'clock to 12 (0) o'clock directions.

For example, as shown in FIG. 8B, the concentric circular grooves are formed on the exterior part 700 by the cutting tool of the first embodiment. The grooves are V-shaped in cross section and are several hundreds nm in width.

The concentric circular grooves are different only in the orientations. A slope angle θ, a pitch p, and a depth h are equal to those of the first embodiment.

Light incident on the structural color regions 710 is diffracted by the concentric circular grooves in all the directions. The diffracted light generated in all the directions is viewed by a user as colored light including structural colors.

The concentric square grooves may be formed on the die (not shown) of the exterior part 700 instead of the exterior part 700. Thus the exterior part 700 on which the concentric square grooves are formed can be manufactured by injection molding.

### (Eighth Embodiment)

An eighth embodiment of the present invention will be described below.

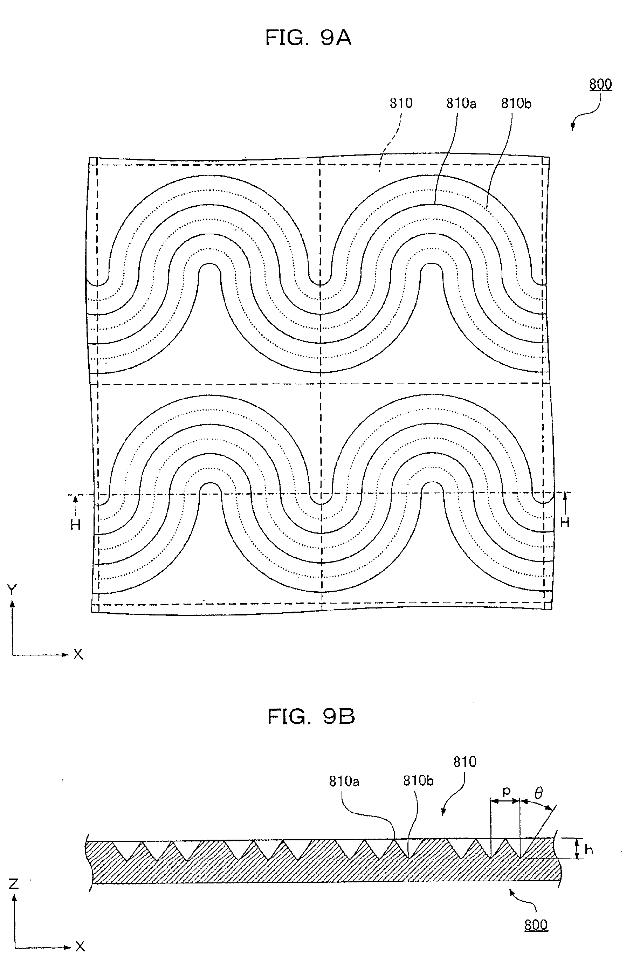

As shown in FIG. 9A, structural color regions 810 are formed on the surface (X-Y plane) of a resin exterior part 800. The structural color regions 810 (indicated by broken lines in FIG. 9A) are arranged in X direction and Y direction. In FIG. 9A, dotted lines represent valleys and solid lines represent peaks. On the X-Y plane, 0 o'clock is set at the upper side and directions at every 30° in a clockwise direction are set at 1 o'clock to 11 o'clock. The 0 o'clock or 6 o'clock direction is denoted as Y direction and the 3 o'clock or 9 o'clock direction is denoted as X direction.

The structural color region 810 is a rectangular region (several tens µm to several µm in X direction and Y direction) in which a peak-valley structure is formed
by a wavy peak-valley pattern. The wavy peak-valley pattern includes a plurality of wavy grooves (hereinafter, will be called wavy grooves) arranged in a first direction (Y direction). The wavy grooves are extended perpendicularly (in X direction) to the first direction in a meandering manner and are formed with dimensions (several hundreds nm) enabling the generation of diffracted light including structural colors.

In the structural color region 810, peaks 810a and valleys 810b are formed and the surfaces are inclined in the 6 o'clock to 3 o'clock directions, in the 9 o'clock to 12 o'clock directions, in the 0 o'clock to 3 o'clock directions, and in the 9 o'clock to 6 o'clock directions.

In other words, the structural color region 810 includes a part having the surfaces inclined in the 6 o'clock to 3 o'clock directions, a part having the surfaces inclined in the 9 o'clock to 12 (0) o'clock directions, a part having the surfaces inclined in the 0 o'clock to 3 o'clock directions, and a part having the surfaces inclined in the 9 o'clock to 6 o'clock directions.

For example, as shown in FIG. 9B, the wavy grooves are formed by forming semicircular grooves on the exterior part 800 with the cutting tool of the first embodiment. The grooves are V-shaped in cross section and are several hundreds nm in width. In this case, the wavy grooves are continuously formed over the adjacent structural color regions 810.

The wavy grooves are different only in the orientations. A slope angle θ, a pitch p, and a depth h are equal to those of the first embodiment.

Light incident on the structural color regions 810 is diffracted by the wavy grooves in all directions. The diffracted light in all the directions is viewed by a user as colored light including structural colors.

The wavy grooves may be formed on the die (not shown) of the exterior part 800 instead of the exterior part 800. Thus the exterior part 800 on which the wavy grooves are formed can be manufactured by injection molding.

### (Others)

Exterior parts of the present invention are not limited to the foregoing first to eighth embodiments as long as exterior parts satisfy conditions (1) to (5), which will be described below. As a matter of course, the first to eighth embodiments may be combined. For example, a structural color region formed by a linear peak-valley pattern and a structural color region formed by a curved peak-valley pattern may be combined.

(1) Exterior parts of the present invention have a peak-valley pattern on the front side and/or the back side.

(2) The peak-valley structure is formed by a peak-valley pattern including multiple grooves in a region of several tens µm to several µm,

(3) The widths, depths, and pitches of the grooves are dimensions (several hundreds nm) enabling the generation of diffracted light (colored light) including structural colors.

(4) Multiple inclined surfaces including at least a surface inclined in a first direction and a surface inclined in a second direction different from the first direction are formed with the grooves in the region.

(5) Light incident on the region is viewed as diffracted light (colored light) including structural colors in multiple directions, because of the inclined surfaces.

When a peak-valley structure is formed on the back side of the exterior part, the peak-valley structure may be coated with a colored film that hardly transmits light incident from the front side of the exterior part.

### Industrial Applicability

The present invention can be used as exterior parts that can exhibit structural colors and a method of manufacturing the same.

## Claims

1. Exterior parts on which a peak-valley structure capable of generating colored light including structural colors is formed, wherein
the peak-valley structure is formed by a peak-valley pattern including multiple grooves and has a first structural color region in which surfaces inclined in a first direction are formed and a second structural color region in which surfaces inclined in a second direction different from the first direction are formed.

2. Exterior parts according to claim 1, wherein
the first structural color region is formed by a first peak-valley pattern in which the grooves are arranged in the first direction, and
the second structural color region is formed by a second peak-valley pattern in which the grooves are arranged in the second direction.

3. Exterior parts according to claim 2, wherein
at least one of the first structural color region and the second structural color region is formed by a peak-valley pattern including multiple linear grooves.

4. Exterior parts according to claim 2, wherein
at least one of the first structural color region and the second structural color region is formed by a peak-valley pattern including multiple curved grooves.

5. Exterior parts according to claim 1, wherein
the first structural color region and the second structural color region are each formed by a peak-valley pattern in which multiple concentric grooves are arranged with respect to a common center.

6. Exterior parts according to claim 1, wherein
the first structural color region and the second structural color region are each formed by a peak-valley pattern in which multiple wavy grooves are arranged in a predetermined direction.

7. A method of manufacturing exterior parts on which a peak-valley structure capable of generating colored light including structural colors is formed,
the method comprising:
performing surface treatment for forming the peak-valley structure, several times on one of exterior parts and a die of exterior parts while changing an angle of direction, and thereby forming a first region in which surfaces inclined in a first direction are formed and a second region in which surfaces inclined in a second direction different from the first direction are formed.
